# EUROPÄISCHE PATENTSCHRIFT

(11) **EP 2 085 178 B1**
(45) Veröffentlichungstag und Bekanntmachung des Hinweises auf die Patenterteilung: **18.08.2010**
(21) Anmeldenummer: 09450011.3
(22) Anmeldetag: 19.01.2009
(51) Int. Cl.: B23Q 7/04, B23Q 7/10, B23Q 7/14

(54) **Vorrichtung zur Übergabe und Übernahme von auf Trägern angeordneten Werkstücken und/oder Werkzeugen**
Device for transferring and taking over workpieces and/or tools assembled on carriers
Dispositif de transfert et de transmission de pièces usinées et/ou des outils agencés sur des supports

(30) Priorität: 31.01.2008 AT 1502008
(43) Veröffentlichungstag der Anmeldung: 05.08.2009
(73) Patentinhaber: Promot Automation GmbH, 4661 Roitham (AT)
(72) Erfinder: Mayr, Robert, 4655 Vorchdorf (AT)
(74) Vertreter: Hübscher, Helmut

(56) Entgegenhaltungen:
- EP-A- 0 792 719
- EP-A- 1 287 947
- DE-A1-102004 031 929
- DE-U1- 9 218 147
- US-A1- 2002 195 312
- US-B1- 6 183 188

## Beschreibung

Die Erfindung bezieht sich auf eine Vorrichtung zur Übergabe und Übernahme von auf Trägern angeordneten Werkstücken und/oder Werkzeugen zwischen einem Speicher und einer Bearbeitungsanlage mit einer dem Speicher zugeordneten Hubeinrichtung, die einen teleskopartigen Querförderer für die in ihrer Grundrissform rechteckigen Träger aufweist, sowie mit wenigstens einem eine Aufnahme für die Träger bildenden Schlitten, der in Förderrichtung des Querförderers zwischen der Hubeinrichtung und einer Übergabe- bzw. Übernahmestellung verfahrbar ist.

Um auf Trägern mit rechteckiger Grundrissform angeordnete Werkstücke einer Bearbeitungsanlage zu übergeben, ist es bekannt (WO 2006/000317 A1), die Träger mit den darauf vorbereiteten Werkstücken in einem Speicher zu stapeln, der eine Hubeinrichtung mit einem Querförderer für die beladenen Werkstückträger aufweist. Dieser Querförderer bildet eine rahmenförmige Trägerhalterung, die auf einer quer zur Hubrichtung vorzugsweise beidseitig ausfahrbaren Teleskopachse gelagert ist, sodass die mit Werkstücken beladenen Träger einzeln von Trägerstapeln abgenommen oder auf solche Trägerstapel aufgesetzt werden können, die sich in Richtung der Teleskopachse des Querförderers neben der Hubeinrichtung befinden. Die mit Hilfe der Teleskopachse über einen Trägerstapel verfahrbare Trägerhalterung kann ja über die Hubeinrichtung auf den Trägerstapel abgesenkt werden, um den jeweils obersten Träger des Stapels aufzunehmen oder diesen Stapel um einen Träger zu vergrößern. Der vom Querförderer aufgenommene und vom Trägerstapel abgehobene Träger kann dann einer Übernahme- und Übergabeeinrichtung für die Bearbeitungsanlage zugeführt werden, die wenigstens einen in einer vorgegebenen Höhe in Förderrichtung des Querförderers verfahrbaren Schlitten mit einer Trägeraufnahme umfasst. Der von der Hubeinrichtung aufgenommene Träger kann somit über den Querförderer dem Schlitten übergeben werden, der den Träger mit den Werkstücken in eine vorgegebene Übergabe- und Übernahmestellung verlagert, in der die Werkstücke mit Hilfe entsprechender Greifeinrichtungen erfasst und nacheinander der Bearbeitungsanlage zugeführt werden können. Die bearbeiteten Werkstücke können wieder auf dem Träger abgelegt werden, um dann mit dem Träger auf einem Trägerstapel für bearbeitete Werkstücke im Speicher abgesetzt zu werden. Können zwei oder mehr Schlitten mit Hilfe des Querförderers beschickt werden, so kann die Bereitstellungsfrequenz für die Träger zur Entnahme oder Ablage der Werkstücke vorteilhaft an die Arbeitstakte der Bearbeitungsanlage angepasst werden, wird doch eine Trägerhandhabung auch während der Bearbeitung der Werkstücke eines Trägers auf einem Schlitten in der vorgegebenen Übergabe- und Übernahmestellung möglich. Trotzdem bleibt die Bereitstellungsfrequenz für die Träger beschränkt. Die quer zur Teleskopachse verlaufende, rahmenförmige Trägerhalterung bedingt außerdem, dass zum Freigeben eines auf einem Trägerstapel oder einem Schlitten abgesetzten Trägers die Trägerhaltung über den Träger angehoben werden muss, damit die Trägerhalterung mittels der Teleskopachse vom Stapel bzw. Schlitten wegbewegt werden kann. Diese zwingende Hubbewegung für die Trägerhalterung zum Freigeben eines Trägers bedingt eine erhebliche Vergrößerung der Bauhöhe.

Der Erfindung liegt somit die Aufgabe zugrunde, eine Vorrichtung der eingangs geschilderten Art zur Übergabe und Übernahme von auf Trägern angeordneten Werkstücken und/oder Werkzeugen zwischen einem Speicher und einer Bearbeitungsanlage so auszugestalten, dass einerseits die Handhabung der Träger zum Bereitstellen der zu bearbeitenden und zur Aufnahme der bearbeiteten Werkstücke verbessert und anderseits die Bauhöhe verringert werden kann.

Die Erfindung löst die gestellte Aufgabe dadurch, dass der Querförderer der Hubeinrichtung einen Greifer für die Träger mit zwei parallelen Teleskoparmen umfasst, die die Träger auf einander gegenüberliegenden, parallel zu den Teleskoparmen verlaufenden Rechteckseiten einspannen, und dass neben dem in Förderrichtung des Querförderers verfahrbaren Schlitten wenigstens ein weiterer dazu quer verfahrbarer Schlitten mit einer Trägeraufnahme vorgesehen ist, wobei die Schlittenbahnen im Bereich des Querförderers zueinander senkrecht verlaufen.

Durch die Ausbildung des Greifers in Form von zwei parallelen Teleskoparmen, die quer zu ihrer Längserstreckung gegeneinander verstellbar gelagert sind, ergibt sich eine vorteilhafte Konstruktion, weil die teleskopartigen Greiferarme die Träger nicht nur zwischen sich klemmen, sondern auch aufgrund ihrer teleskopischen Ausbildung in Richtung der Teleskoparme verlagern können, sodass sich eine zusätzliche Fördereinrichtung für die Träger im Bereich der Hubeinrichtung erübrigt. Dies bedeutet aber auch, dass die Teleskoparme in ihrer Längsrichtung von einem auf einem Trägerstapel oder einem Schlitten abgesetzten Träger zurückgezogen werden können, um den Träger freizugeben, wodurch sich eine hiefür sonst erforderliche Hubbewegung des Greifers erübrigt. Aufgrund dieses Umstandes kann daher die Bauhöhe entscheidend verringert werden.

Der zusätzliche quer zu den Teleskoparmen verfahrbare Schlitten vergrößert darüber hinaus die Handhabungsmöglichkeiten, weil sich durch die zueinander senkrechten Schlittenbahnen einerseits eine Erweiterung hinsichtlich der Abstellplätze für die von den Schlitten aufgenommenen Träger eröffnet, und zwar in einer gemeinsamen Förderebene, und anderseits zusätzliche Anbindungsstellen für die Bearbeitungsanlage gewonnen werden, dann nämlich, wenn die einzelnen Schlittenbahnen je für sich eine Übergabe- und Übernahmestelle für die Bearbeitungsanlage bilden.

Besonders vorteilhafte Konstruktionsverhältnisse ergeben sich in diesem Zusammenhang dadurch, dass die Bahn des in Förderrichtung des Querförderers verfahrbaren Schlittens T-förmig zur Bahn des dazu quer verfahrbaren Schlittens verläuft und dass die Hubeinrichtung in Verlängerung der Schlittenbahn in Förderrichtung des Querförderers auf der dieser Schlittenbahn gegenüberliegenden Seite der dazu quer verlaufenden Schlittenbahn vorgesehen ist. In diesem Fall bildet nämlich der Kreuzungsbereich der beiden Schlittenbahnen den gemeinsamen Anschluss der Schlitten an den Querförderer, mit dessen Hilfe die Schlitten auf den kreuzenden Schlittenbahnen be- und entladen werden, je nachdem, welcher der Schlitten sich zum Be- und Entladen im Kreuzungsbereich befindet.

In der Zeichnung ist der Erfindungsgegenstand beispielsweise dargestellt. Es zeigen
- Fig. 1: eine erfindungsgemäße Vorrichtung zur Übergabe und Übernahme von auf Trägern angeordneten Werkstücken und/oder Werkzeugen zwischen einem Speicher und einer Bearbeitungsanlage in einer vereinfachten Draufsicht,
- Fig. 2: diese Vorrichtung in einem Schnitt nach der Linie II-II der Fig. 1 in einem größeren Maßstab,
- Fig. 3: eine Draufsicht auf den Querförderer der Hubeinrichtung in einem grö- ßeren Maßstab,
- Fig. 4: diesen Querförderer in einem Schnitt nach der Linie VI-VI der Fig. 3 und
- Fig. 5: den Querförderer im Schnitt nach der Linie V-V der Fig. 4.

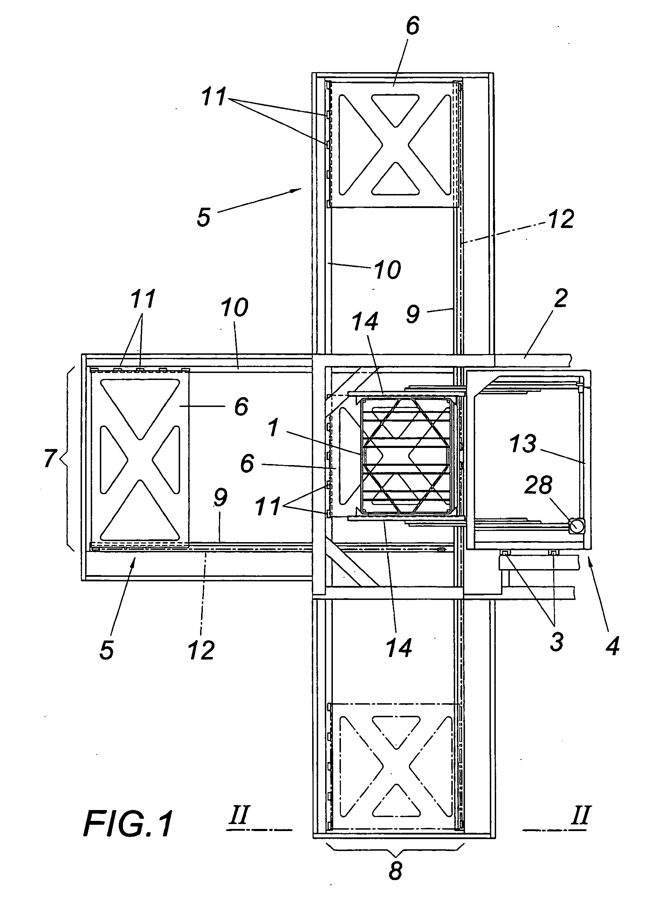

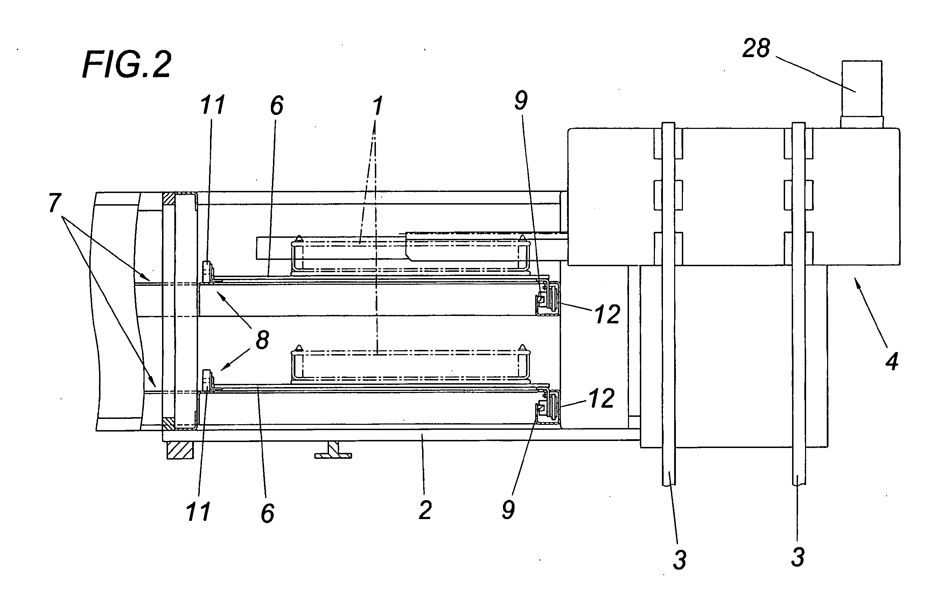

Wie sich aus den Fig. 1 und 2 ergibt, weist die Vorrichtung zur Übergabe und Übernahme von auf Trägern 1 angeordneten Werkstücken und/oder Werkzeugen ein Gestell 2 auf, das eine vertikale Führung 3 für einen Querförderer 4 einer nicht näher dargestellten Hubeinrichtung bildet. Mit Hilfe dieser Hubeinrichtung können mit Werkstücken bzw. Werkzeugen beladene Träger 1 in an sich bekannter Weise aus einem nach unten anschließenden Speicher entnommen oder in diesen Speicher abgelegt werden. Zur Übergabe der zu bearbeitenden Werkstücke an eine angeschlossene Bearbeitungsanlage bzw. zur Übernahme der bearbeiteten Werkstücke sind die Träger 1 an zumindest einer vorgegebenen Übergabestellung 5 zu positionieren, um die Werkstücke mit Hilfe von Greifern den Trägern 1 entnehmen oder auf die Träger 1 ablegen zu können. Zu diesem Zweck sind jeweils einen Träger 1 aufnehmende Schlitten 6 vorgesehen, die auf Schlittenbahnen 7 und 8 verfahrbar sind. Diese Schlittenbahnen 7, 8 werden gemäß dem dargestellten Ausführungsbeispiel aus einer Führungsschiene 9 auf einer Längsseite der Schlittenbahnen 7, 8 und einer Laufschiene 10 auf der gegenüberliegenden Seite der Schlittenbahnen 7, 8 gebildet. Die auf der Führungsschiene 9 geführten und mit Hilfe von Laufrollen 11 auf den Laufschienen 10 abrollenden Schlitten 6 werden mit Hilfe von umlaufenden Kettentrieben 12 angetrieben, die entlang der Führungsschiene 9 vorgesehen sind. Wie der Fig. 2 entnommen werden kann, sind die Führungsbahnen 7 und 8 jeweils in zwei übereinanderliegende Ebenen vorgesehen, um eine größere Handhabungsfreiheit für die Übergabe und Übernahme der Werkstücke zu erreichen, was jedoch nicht zwingend ist.

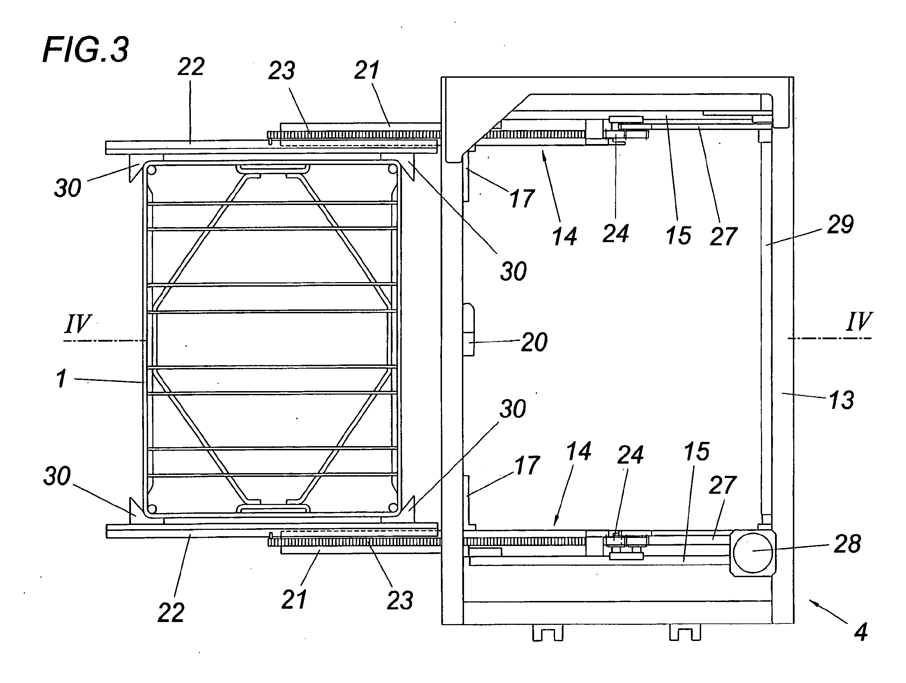

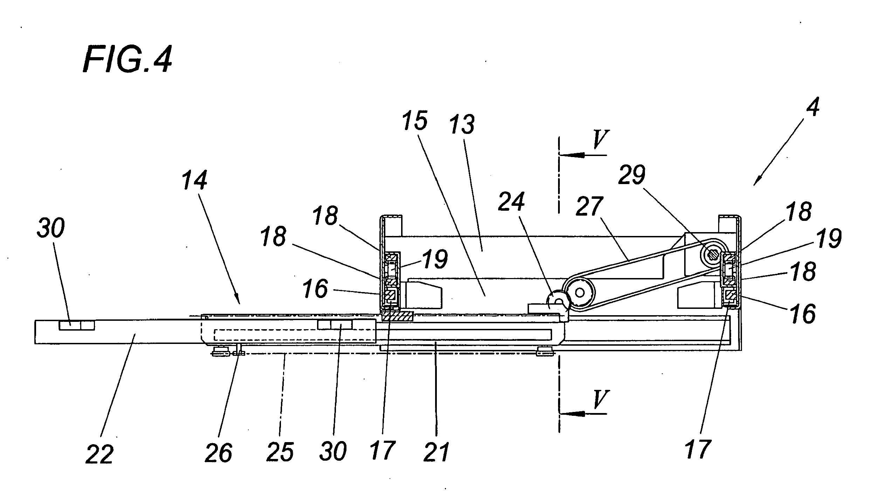

Der entlang der vertikalen Führung 3 der Höhe nach verstellbare Querförderer 4 weist gemäß den Fig. 3 bis 5 einen Tragrahmen 13 auf, in dem zwei parallele Teleskoparme 14 quer zu ihrer Längserstreckung gegensinnig verstellbar gelagert sind. Diese Teleskoparme 14 bilden zu diesem Zweck Seitenwangen 15, die auf rahmenseitigen Führungen 16 verschiebbar gelagert sind. Die mit 17 bezeichneten Führungslager der Seitenwangen 15 sind mit Zahnstangen 18 verbunden, zwischen denen ein Ritzel 19 angeordnet ist, sodass bei einer Verlagerung einer der Zahnstangen 18 mit Hilfe eines Stelltriebes 20 die andere Zahnstange 18 gegensinnig verstellt wird.

Die Teleskoparme 14 weisen neben den Seitenwangen 15 zwei Auszüge 21 und 22 auf. Während die mittleren Auszüge 21 mit Zahnstangen 23 versehen sind, die mit Hilfe eines Ritzels 24 angetrieben werden, das auf der jeweiligen Seitenwange 15 gelagert ist, ist für die Verlagerung der äußeren Auszüge 22 ein Kettentrieb 25 vorgesehen, der einen am Auszug 22 angreifenden Mitnehmer 26 trägt. Während der Antrieb für den Kettentrieb 25 aus Übersichtlichkeitsgründen nicht dargestellt ist, wird der Antrieb der mittleren Auszüge 21 über einen Kettentrieb 27 angedeutet, der mit dem mit der jeweiligen Zahnstange 24 kämmenden Ritzel 24 antriebsverbunden ist. Da der mittlere Auszug 21 beider Teleskoparme 14 synchron verlagert werden soll, werden die Kettentriebe 27 der beiden Teleskoparme 14 durch einen gemeinsamen Antriebsmotor 28 angetrieben. Die die beiden Kettentriebe 27 miteinander verbindende Keilnutwelle ist mit 29 bezeichnet. Die im Tragrahmen 13 gelagerte Keilnutwelle 29 lässt eine axiale Verschiebung der Kettentriebe 27 bei der Querverlagerung der Teleskoparme 14 ohne weiteres zu.

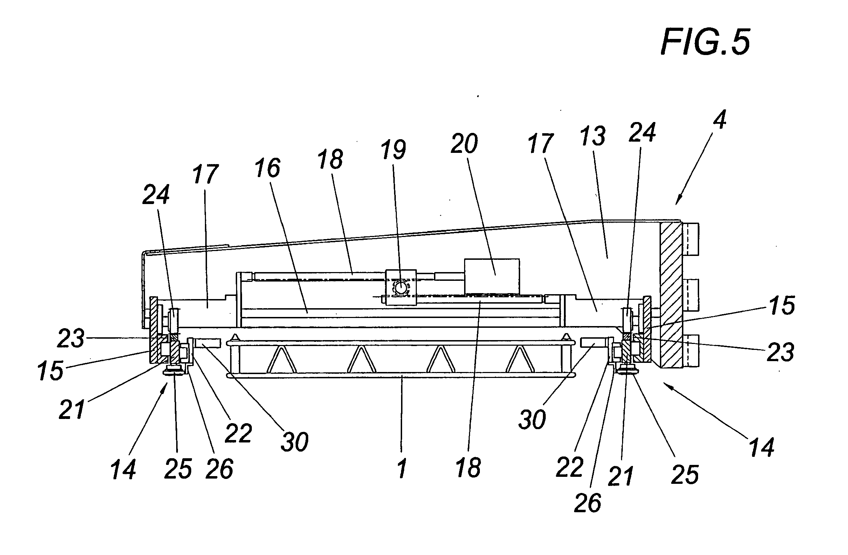

Die äußeren Auszüge 22 der beiden Teleskoparme 14 sind mit Klemmbacken 30 für die Träger 1 versehen. Durch eine Querverlagerung der beiden Teleskoparme 14 über die Zahnstangen 18 können somit die Träger 1 zwischen den äußeren Auszügen 22 eingespannt werden, wie dies in der Fig. 3 dargestellt ist. Die Fig. 5 zeigt die Stellung der Teleskoparme 14 in ihrer Ausgangsstellung vor der Erfassung eines Trägers 1. Der zwischen den Teleskoparmen 14 erfasste Träger 1 kann dann in Ausziehrichtung der Teleskoparme 14 verlagert werden. In der Fig. 3 ist eine Übergabestellung gezeichnet, in der der Rahmen beispielsweise auf einen Trägerstapel im Speicher abgelegt werden kann. Zur Übergabe des Trägers 1 an einen der Schlitten 6 ist dieser Schlitten 6 zunächst entlang der zugehörigen Schlittenbahn 7, 8 in den Kreuzungsbereich der T-förmig angeordneten Schlittenbahnen 7, 8 zu verfahren, wie dies in der Fig. 1 dargestellt ist. Da die Hubeinrichtung mit dem Querförderer 4 auf der der Schlittenbahn 7 gegenüberliegenden Seite der Schlittenbahn 8 angeordnet ist und die Schlittenbahn 7 in Förderrichtung des Querförderers 4 verläuft, kann der vom einen Greifer bildenden Querförderer erfassten Träger 1 mit Hilfe der Teleskoparme 14 über den im Kreuzungsbereich der Schlittenbahnen 7, 8 befindlichen Schlitten 6 vorgeschoben und dann auf den Schlitten 6 abgesetzt werden, bevor die Teleskoparme 14 auseinandergefahren werden und nach ihrem Einziehen in die Ausgangsstellung innerhalb des Tragrahmens 13 den Schlitten 6 mit dem Träger 1 freigeben, der dann mit Hilfe dieses Schlittens 6 zur entsprechenden Handhabung entlang der jeweiligen Schlittenbahn 7, 8 verlagert werden kann. Da für das Freigeben des Trägers 1 lediglich die Teleskoparme 14 in ihre Ausgangsstellung zurückgezogen werden müssen und hiefür keine zusätzliche Hubbewegung des Querförderers 4 erforderlich ist, kann beispielsweise der Höhenabstand zwischen den Schlittenbahnen 7, 8 in den beiden übereinanderliegenden Ebenen klein gehalten werden, was sich unmittelbar in einer niedrigen Bauhöhe der Vorrichtung auswirkt.

## Patentansprüche

1. Vorrichtung zur Übergabe und Übernahme von auf Trägern (1) angeordneten Werkstücken und/oder Werkzeugen zwischen einem Speicher und einer Bearbeitungsanlage mit einer dem Speicher zugeordneten Hubeinrichtung, die einen teleskopartigen Querförderer (4) für die in ihrer Grundrissform rechteckigen Träger (1) aufweist, sowie mit wenigstens einem eine Aufnahme für die Träger (1) bildenden Schlitten (6), der in Förderrichtung des Querförderers (4) zwischen der Hubeinrichtung und einer Übergabe- bzw. Übernahmestellung verfahrbar ist, **dadurch gekennzeichnet, dass** der Querförderer (4) der Hubeinrichtung einen Greifer für die Träger (1) mit zwei parallelen Teleskoparmen (14) umfasst, die die Träger (1) auf einander gegenüberliegenden, parallel zu den Teleskoparmen (14) verlaufenden Rechteckseiten einspannen, und dass neben dem in Förderrichtung des Querförderers (4) verfahrbaren Schlitten (6) wenigstens ein weiterer dazu quer verfahrbarer Schlitten (6) mit einer Trägeraufnahme vorgesehen ist, wobei die Schlittenbahnen (7, 8) im Bereich des Querförderers (4) zueinander senkrecht verlaufen.

2. Vorrichtung nach Anspruch 1, **dadurch gekennzeichnet, dass** die Bahn (7) des in Förderrichtung des Querförderers (4) verfahrbaren Schlittens (6) T-förmig zur Bahn (8) des dazu quer verfahrbaren Schlittens (6) verläuft und dass die Hubeinrichtung in Verlängerung der Schlittenbahn (7) in Förderrichtung des Querförderers (4) auf der dieser Schlittenbahn (7) gegenüberliegenden Seite der dazu quer verlaufenden Schlittenbahn (8) vorgesehen ist.

## Claims

1. Device for transferring and taking over workpieces and/or tools, which are disposed on carriers (1), between a storage area and a processing installation having a lifting device which is allocated to the storage area and comprises a telescopic transverse conveyor (4) for the carriers (1) which are rectangular in their plan view form, and having at least one carriage (6) which forms a receiver for the carriers (1) and is movable in the direction of conveyance of the transverse conveyor (4) between the lifting device and a transfer or take-over position, **characterised in that** the transverse conveyor (4) of the lifting device comprises a gripper for the carriers (1) having two parallel telescopic arms (14) which clamp the carriers (1) on mutually opposite rectangular sides which extend in parallel with the telescopic arms (14), and **in that** provided in addition to the carriage (6), which is movable in the direction of conveyance of the transverse conveyor (4), is at least one further carriage (6) which is movable transversely thereto and has a carrier receiver, wherein the carriage tracks (7, 8) extend perpendicular to one another in the region of the transverse conveyor (4).

2. Device as claimed in claim 1, **characterised in that** the track (7) of the carriage (6), which is movable in the direction of conveyance of the transverse conveyor (4), extends in a T-shaped manner with respect to the track (8) of the carriage (6), which is movable transversely thereto, and **in that** the lifting device is provided in the extension of the carriage track (7) in the direction of conveyance of the transverse conveyor (4) on the side, opposite this carriage track (7), of the carriage track (8) which extends transversely thereto.

## Revendications

1. Dispositif de transfert et de transmission de pièces usinées et/ou d'outils disposé(e)s sur des supports (1), entre un stockage et une installation d'usinage avec un dispositif de levage associé au stockage, présentant un transporteur transversal (4) de type télescopique, pour les supports (1) dont la forme de profil est rectangulaire, ainsi qu'avec au moins un chariot (6) formant un réceptacle pour les supports (1), déplaçable dans la direction de transport du transporteur transversal (4) entre le dispositif de levage et une position de transfert et de transmission, **caractérisé en ce que** le transporteur transversal (4) du dispositif de levage comprend un preneur pour les supports (1) avec deux bras télescopiques (14) parallèles, qui enserrent les supports (1) sur des côtés de rectangle opposés les uns aux autres, s'étendant parallèlement aux bras télescopiques (14), et **en ce que**, outre le chariot (6) déplaçable dans la direction de transport du transporteur transversal (4), est prévu au moins un autre chariot (6), déplaçable perpendiculairement à celui-ci, avec un réceptacle à support, les pistes à chariot (7, 8) s'étendant perpendiculairement entre elles dans la zone du transporteur transversal (4).

2. Dispositif selon la revendication 1, **caractérisé en ce que** la piste (7) du chariot (6) déplaçable dans la direction de transport du transporteur transversal (4) s'étend en forme de T par rapport à la piste (8) du chariot (6) déplaçable perpendiculairement à celui-ci, et **en ce que** le dispositif de levage est prévu dans le prolongement de la piste à chariot (7) dans la direction de transport du transporteur transversal (4), sur le côté, opposé à cette piste à chariot (7), de la piste à chariot (8) s'étendant perpendiculairement à celle-ci.
